# EUROPEAN PATENT APPLICATION

(11) **EP 2 034 794 A1**
(43) Date of publication of application: **11.03.2009**
(21) Application number: 08153624.5
(22) Date of filing: 28.03.2008
(51) Int. Cl.: H04W 72/04

(54) **System selection based on application requirements and preferences**

(30) Priority: 15.06.2007 US 944166 P; 20.02.2008 US 34443
(71) Applicant: Qualcomm Incorporated, San Diego, CA 92121-1714 (US)
(72) Inventor: Balasubramanian, Srinivasan, San Diego, CA 92121-1714 (US); Kannan, Saravan Krishnan, San Diego, CA 92121-1714 (US)
(74) Representative: Catesby, Olivia Joanne

(57) **Abstract**

Techniques for performing system selection based on requirements and preferences of applications are described. A terminal maintains a policy table containing applications supported by the terminal, priorities of the applications, radio technologies that can be used for each application, and priorities of the radio technologies for each application. The terminal manages policies associated with the supported applications and radio technologies, determines the most suitable radio technology for each application, and activates and deactivates radio technologies in response to events, e.g., the terminal being turned on, a call being placed, the terminal leaving the coverage of a radio technology, etc.

## Description

### CROSS-REFERENCE TO RELATED APPLICATIONS

**I.** This application claims priority to U.S. Patent Application Serial No. 60/944,166, entitled "System Selection Based On Application Requirements And Preferences" filed June 15, 2007.

### BACKGROUND

### I. Field

The present disclosure relates generally to communication, and more specifically to techniques for performing system selection.

### II. Background

Wireless communication networks are widely deployed to provide various communication services such as voice, video, packet data, messaging, broadcast, etc. These wireless networks include wireless wide area networks (WWANs) that provide communication coverage for large geographic areas, wireless local area networks (WLANs) that provide communication coverage for medium-size geographic areas, and wireless personal area networks (WPANs) that provide communication coverage for small geographic areas. Different wireless networks typically have different capabilities, requirements, and coverage areas.

A terminal may be capable of communicating with different wireless networks and may be located within the coverage of zero, one or multiple wireless networks at any given moment. The terminal may be invoked by an application to initiate a call in order to obtain communication service for a user. The terminal may then perform system selection to select a suitable wireless network to obtain service. The system selection may be challenging if the terminal can communicate with different wireless networks.

### SUMMARY

Techniques for performing system selection based on requirements and preferences of applications are described herein. In an aspect, a terminal maintains a policy table containing applications supported by the terminal, priorities of the applications, radio technologies that can be used for each application, and preferences of the radio technologies for each application. The terminal manages policies associated with the supported applications and radio technologies, determines the most suitable radio technology for each application, and activates and deactivates radio technologies in response to events, e.g., the terminal being turned on, a call being placed, the terminal leaving the coverage of a radio technology, etc.

In one design, the terminal receives request for communication from at least one application and selects at least one radio technology based on at least one set of radio technologies for the at least one application. Each set includes one or more radio technologies usable by a respective application. The terminal activates the at least one selected radio technology in order to provide communication for the at least one application.

Various aspects and features of the disclosure are described in further detail below.

### BRIEF DESCRIPTION OF THE DRAWINGS

FIG. 1 shows deployment of wireless networks of different radio technologies.

FIG. 2 shows a processing module for a terminal.

FIG. 3 shows a policy table used to support system selection.

FIG. 4 shows a call flow for system selection for an application.

FIG. 5 shows a call flow for system selection for additional applications.

FIG. 6 shows a call flow for change of radio technology due to coverage loss.

FIG. 7 shows a call flow for change of radio technology when a more preferred radio technology becomes available.

FIG. 8 shows a call flow for system selection for a higher priority application.

FIG. 9 shows a process for performing system selection.

FIG. 10 shows a process for performing system selection for a new application.

FIG. 11 shows a block diagram of the terminal.

### DETAILED DESCRIPTION

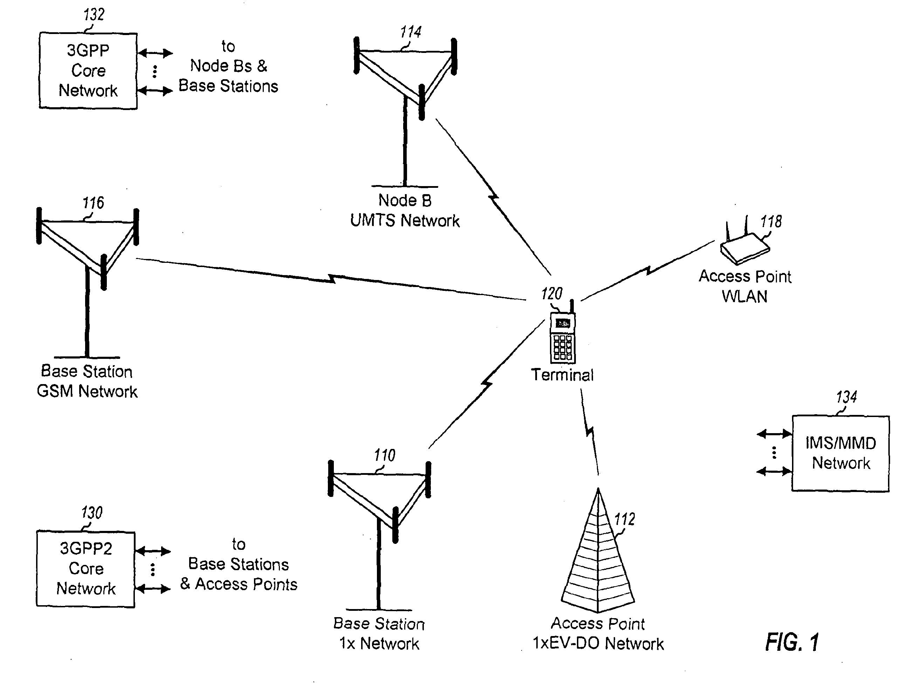

**FIG. 1** shows deployment of various wireless networks within a geographic area. These wireless networks include four WWANs and a WLAN. The terms "system" and "network" are often used interchangeably.

A WWAN is a wireless network that provides communication coverage for a large geographic area such as, e.g., a city, a state, or an entire country. A WWAN may be a multiple-access network capable of supporting multiple users by sharing the available network resources. Some examples of multiple-access networks include Code Division Multiple Access (CDMA) networks, Time Division Multiple Access (TDMA) networks, Frequency Division Multiple Access (FDMA) networks, and Orthogonal FDMA (OFDMA) networks. These multiple-access networks may implement various radio technologies. The terms "radio technology", "radio access technology", "RAT", "access technology", and "air interface" are often used interchangeably. A CDMA network may implement a radio technology such as cdma2000, Wideband-CDMA (W-CDMA), etc. cdma2000 covers IS-2000, IS-856, and IS-95 standards. A CDMA2000 1x (or simply "1x") network is a wireless network that implements IS-2000 and/or IS-95. A CDMA2000 1xEV-DO (or simply, "1xEV-DO") network is a wireless network that implements IS-856. A Universal Mobile Telecommunications System (UMTS) network is a wireless network that implements W-CDMA. A TDMA network may implement a radio technology such as Global System for Mobile Communications (GSM). These various radio technologies, standards, and cellular networks are known in the art. W-CDMA, GSM and UMTS are described in documents from an organization named "3rd Generation Partnership Project" (3GPP). cdma2000 is described in documents from an organization named "3rd Generation Partnership Project 2" (3GPP2). 3GPP and 3GPP2 documents are publicly available.

FIG. 1 shows deployment of four WWANs - 1x, 1xEV-DO, UMTS and GSM networks. Each WWAN typically includes many base stations that support communication for terminals within the coverage of that WWAN. A base station (1x and GSM terminology) is typically a fixed station that communicates with the terminals and may also be referred to as a Node B (UMTS terminology), an access point (1xEV-DO terminology), etc. For simplicity, FIG. 1 shows only one base station 110 for the 1x network, one access point 112 for the 1xEV-DO network, one Node B 114 for the UMTS network, and one Node B 116 for the GSM network.

A WLAN is a wireless network that provides communication coverage for a medium-size geographic area such as, e.g., a building, a mall, an airport terminal, etc. A WLAN may implement the IEEE 802.11 family of standards, Hiperlan, etc. A Wi-Fi network is a WLAN that implements IEEE 802.11. A WLAN may include any number of access points that support wireless communication for any number of stations. For simplicity, only one access point 118 is shown in FIG. 1. A WLAN may be an infrastructure network that has capability to communicate with nodes external to the WLAN. A WLAN may also be an ad hoc network formed by stations desiring to communicate peer-to-peer with one another and having no access to external nodes.

The base stations in the 1x network and/or the access points in the 1xEV-DO network may couple to a 3GPP2 core network 130. Core network 130 may implement ANSI-41 and support roaming and advanced services. The Node Bs in the UMTS network and/or the base stations in the GSM network may couple to a 3GPP core network 132. Core network 132 may implement GSM Mobile Application Part (GSM-MAP) and support roaming and advanced services. The access points in the 1xEV-DO network, the access points in the WLAN, and/or the Node Bs in the UMTS network may also couple to an Internet Protocol (IP) Multimedia Subsystem (IMS)/Multimedia Domain (MMD) network 134 that can provide multimedia services such as Voice-over-IP (VoIP), video conferencing, streaming data, etc. Core networks 130 and 132 may also couple to IMS/MMD network 134 via a backbone. Networks 130, 132 and 134 may provide data connectivity for terminals communicating with the base stations, Node Bs, and access points served by these networks.

Various terminals may be dispersed throughout the coverage areas of the wireless networks in FIG. 1. For simplicity, only one terminal 120 is shown in FIG. 1. A terminal may be stationary or mobile and may also be referred to as a mobile station (1x and GSM terminology), a user equipment (UMTS terminology), an access terminal (1xEV-DO terminology), a station (IEEE 802.11 terminology), a subscriber unit, etc. A terminal may be a cellular phone, a handheld device, a wireless device, a personal digital assistant (PDA), a laptop computer, a wireless modem, a handset, etc.

Terminal 120 may support various radio technologies for WWANs and/or WLANs. Terminal 120 may thus be a WWAN device as well as a WLAN station, e.g., a cellular phone with WLAN capability. Terminal 120 may be able to communicate with one or more wireless networks at any given moment depending on its location and capabilities.

In general, a terminal may be capable of communicating with any number of wireless networks of any radio technologies. The techniques described herein may be used for various wireless networks and radio technologies. For clarity, certain aspects of the techniques are described below for a terminal capable of communicating with 1x, 1xEV-DO and UMTS networks and WLAN.

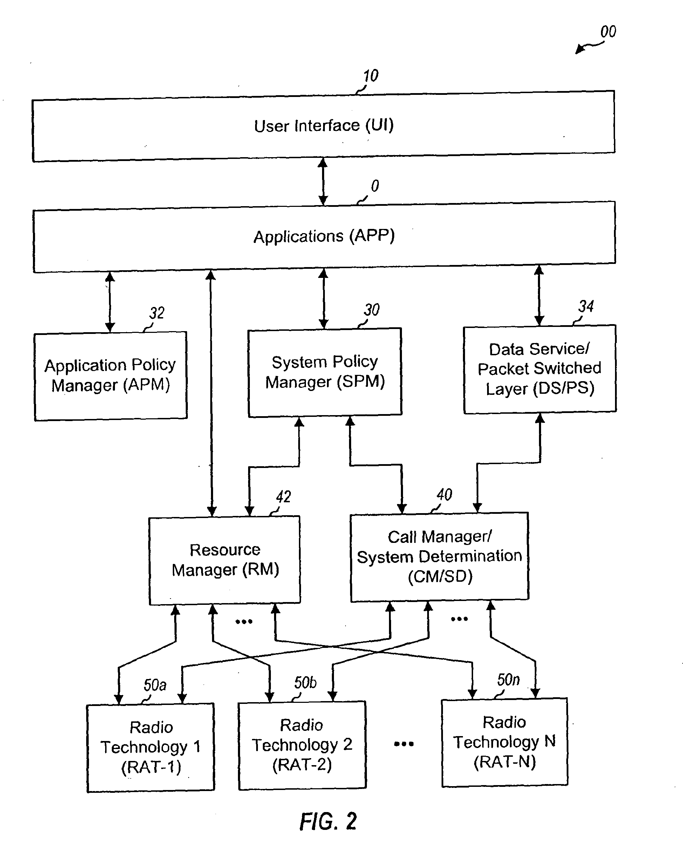

**FIG. 2** shows a design of a processing module 200 for terminal 120. Within processing module 200, a user interface (UI) module 210 supports interactions with a user. Applications (APP) 220 may include various end-user applications such as, e.g., voice applications that provide voice services, data applications that provide data services, a web browser, an email client, etc. Applications 220 may generate requests to originate calls to obtain communication services.

A system policy manager (SPM) 230 interacts with applications 220 and determines which one or more radio technologies to activate at any given moment. Activation refers to making a radio technology available for use and may include acquisition of a wireless network of that radio technology. An application policy manager (APM) 232 enforces application policies, receives notifications of state changes from applications 220, determines whether the state changes result in corresponding changes in a concurrent application, and notifies the concurrent application accordingly. A data services/packet-switched layer (DS/PS) module 234 performs functions to support data services and packet-switched services. For data services, DS/PS module 234 addresses packet data interactions with a radio protocol stack, which are specific to each radio technology. For packet-switched services, DS/PS module 234 addresses packet data implementation that is not dependent on radio technology and may support various protocols such as, e.g., Session Initiation Protocol (SIP), Real-time Transport Protocol (RTP), User Datagram Protocol (UDP), Transmission Control Protocol (TCP), Internet Protocol (IP), Mobile-IP, IP security (IPsec), Internet Control Message Protocol (ICMP), Point-to-Point Protocol (PPP), etc. These protocols may be used for VoIP, data, and other types of call on packet-switched wireless networks. For example, a VoIP call may utilize SIP, RTP, UDP, TCP and IP.

A call manager/system determination (CM/SD) module 240 controls acquisition of wireless networks of selected radio technologies, e.g., when directed by system policy manager 230. CM/SD module 240 also controls origination, establishment, and tear down of calls, e.g., as directed by applications 220. CM/SD module 240 receives requests from applications 220 to make calls via specific radio technologies, controls origination of the calls, and keeps track of the states of the calls.

A resource manager (RM) 242 manages allocation of resources to clients (e.g., media sessions) in accordance with allocation policies. Resource manager 242 also resolves conflicts when concurrent demand for a given resource exceeds the capabilities of the resource. The resources may comprise hardware blocks, bus, CPU_{S}, memories, etc. Modules 250a through 250n support communication for different radio technologies, e.g., WLAN, 1x, 1xEV-DO, UMTS, etc.

Terminal 120 may be within the coverage of one or more radio technologies at any given moment. Terminal 120 may be able to communicate with only one radio technology or multiple radio technologies concurrently based on its capabilities. Terminal 120 may also have any number of active applications at any given moment. Each application may support a particular communication service, and the terms "application" and "service" may be used interchangeably herein. The active applications may have different priorities as well as preferences on which radio technologies to receive service. It may be desirable to select the most suitable radio technologies for the active applications based on the available radio technologies, the capabilities of terminal 120, and the requirements and preferences of the active applications.

System policy manager 230 may manage policies associated with various radio technologies supported by terminal 120. These policies may allow system policy manager 230 to:
1. Determine the most suitable radio technology for each application, and
2. Activate and deactivate radio technologies in response to events, e.g., terminal 120 being turned on, a call being placed, terminal 120 leaving the coverage of a radio technology, etc.

System policy manager 230 may support one or more of the system selection schemes shown in Table 1.

**Table 1**

| **Selection Scheme** | **Description** |
|---|---|
| Technology-based system selection | Select one or more radio technologies to support the most number of active applications, e.g., subject to a minimum application set. |
| Application-based system selection | Select a radio technology for each active application by taking into account the priorities of the active applications. |
| Hybrid system selection | Select one or more radio technologies by taking into account the priorities of the active applications and the preferences of the radio technologies for each active application. |

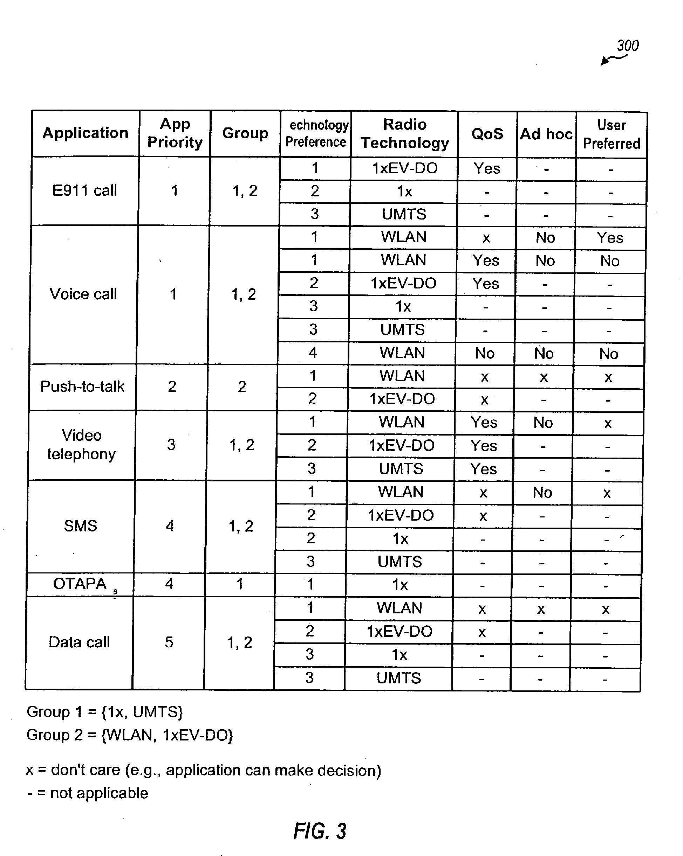

**FIG. 3** shows a design of a policy table 300 that may be used to support system selection. Column 1 of table 300 lists the applications supported by terminal 120. In this example, the supported applications include emergency 911 (E911 ) call, voice call, push-to-talk call, video telephony (VT) call, Short Message Service (SMS), Over-The-Air Parameter Administration (OTAPA), and data call. Column 2 of table 300 lists the priorities of the applications. The priorities range from 1 to 5, with 1 being the highest priority and 5 being the lowest priority. The priorities may be used to resolve conflict among applications competing for resources. Multiple applications may have the same priority, and arbitration rules may be used to resolve conflicts. For example, a currently active application may be selected over a newly activated application of the same priority. Other arbitration rules may also be used, e.g., to maximize the number of active applications that can be supported.

Column 5 of table 300 lists the radio technologies that may be used for each application. In this example, the radio technologies supported by terminal 120 include WLAN, 1x, 1xEV-DO and UMTS, and each application may be supported by all or a subset of these radio technologies. Column 4 lists the preferences/priorities of the radio technologies for each application. The preferences range from 1 to 4, with 1 being the most preferred/highest priority and 4 being the least preferred/lowest priority. The preferences may be used to select the most preferred and available radio technology for each application. Column 6 lists quality-of-service (QoS) requirements for each radio technology. Columns 7 and 8 are only applicable for WLAN. Column 7 indicates whether an ad hoc network may be used, with "No" meaning that a WLAN may be used if it is not an ad hoc network, and "x" meaning that a WLAN may be used regardless of whether it is an ad hoc network or an infrastructure network. Column 8 indicates whether a WLAN is a user preferred/selected network, with "Yes" meaning that a WLAN may be used if it is selected by the user (e.g., manually), "No" meaning that a WLAN may be used even if it is not selected by the user, and "x" meaning that a WLAN may be used regardless of whether or not it is selected by the user.

Column 3 lists one or more radio technology groups to which each application belongs. Group 1 may include 1x and UMTS, and group 2 may include WLAN and 1xEV-DO. An application belongs in group 1 if it can be served by any radio technology in group 1. An application belongs in group 2 if it can be served by any radio technology in group 2. A voice call can be made on WLAN, 1x, 1xEV-DO or UMTS and thus belongs in both groups 1 and 2. A push-to-talk call can be made on WLAN or 1xEV-DO and thus belongs in only group 2. Grouping allows applications to be associated with common radio technologies. Grouping may be used to ensure that when one active application in a given group is moved to a new radio technology, all active applications in that group are also moved to the new radio technology.

Table 300 may be interpreted as follows. Columns 1 and 2 indicate that E911 and voice calls have the highest priority of 1, and data call has the lowest priority of 5 among all supported applications. For E911 call, the three rows indicate that E911 service can be obtained on 1x, 1xEV-DO or UMTS. The first row indicates that an E911 call on 1xEV-DO with QoS is the most preferred. The second row indicates that an E911 call on 1x is the next most preferred. The third row indicates that an E911 call on UMTS is the least preferred.

For voice call, the six rows indicate that voice service may be obtained on WLAN, 1x, 1xEV-DO or UMTS. The first row indicates that a voice call on an infrastructure WLAN selected by the user is the most preferred regardless of whether or not QoS is supported by the WLAN. The second row indicates that a voice call on an infrastructure WLAN with QoS is also the most preferred even if the WLAN is not selected by the user. The third row indicates that a voice call on 1xEV-DO with QoS is the second most preferred. The fourth and fifth rows indicate that a voice call on 1x or UMTS is the third most preferred. The sixth row indicates that a voice call on an infrastructure WLAN without QoS and not selected by the user is the least preferred. The other applications may be served as shown in table 300.

Table 300 shows an example set of applications, their priorities, the radio technologies/configurations on which each application can be supported, and the preferences of the radio technologies for each application. The priorities and preferences used for performing system selection may be independent of the priorities and preferences used for allocating resources to the applications. The preferences among different radio technologies may be determined based on various sources such as a Public Land Mobile Network (PLMN) list for 3GPP networks, a Preferred Roaming List (PRL) for 3GPP2 networks, a Netlist for WLANs, etc. Table 300 may capture the relative priorities across these various lists and may be used to select one or more most suitable radio technologies among the available radio technologies. Other policy tables may be defined with other sets of applications, priorities and preferences, and radio technologies/configurations.

A policy table such as table 300 may be defined *a priori* and used during normal operation. A policy table may also be updated during normal operation. For example, an application may request for a subset of the preconfigured radio technologies based on its current requirements.

In one design, terminal 120 supports a minimum application set (MAS), which includes applications that terminal 120 will activate radio technologies for when these applications are launched. The MAS may be defined by a user, a network operator, etc. The MAS may be statically defined or may vary dynamically. For example, the MAS may include more applications when terminal 120 is plugged into a main power supply and may include fewer applications when terminal 120 operates on battery power. In one design, the MAS includes all applications with the highest priority of 1 in policy table 300. In another design, the MAS includes E911 call, voice call, and video telephony call. The applications in the MAS may be considered to be active immediately upon power up of terminal 120, even if they are not actually active. Terminal 120 may activate new radio technologies for the applications in the MAS, if needed, and may perform system selection such that the applications in the MAS can be supported.

In one design, terminal 120 has an active application set (AAS), which includes applications that are currently active. An application may be added to the AAS when started/launched and removed from the AAS when terminated.

Terminal 120 may perform system selection to select one or more most suitable radio technologies based on the MAS, the AAS, a policy table such as table 300, requirements of network operators, etc. Terminal 120 may perform system selection based on the priorities of the applications and/or the preferences of the radio technologies. For example, WLAN may be preferred over 1x for all applications, with an application-based requirement of activating 1x when a voice call is placed. Table 300 may be used to activate appropriate radio technologies for active applications. Table 300 may also be used to determine when multiple radio technologies should be activated and when it is sufficient to use a single radio technology for the applications in the MAS and AAS.

Terminal 120 may perform system selection in various manners. For clarity, system selection is described for the following example:

| | |
|---|---|
| MAS = {A, B}, | A= {1, 2}, |
| AAS = {A, C}, | B = {2, 1}, |
| | C={1,3}. |

In this example, the MAS includes applications A and B, and the AAS includes applications A and C. Each application may be served on a set of radio technologies given in order of preference. For example, application A on radio technology 1 is preferred over application A on radio technology 2.

In one design, terminal 120 activates the minimum number of radio technologies such that all applications in the MAS and AAS can be supported. In the example above, terminal 120 would activate only radio technology 1, which is included in the three sets of radio technologies for the three applications in the MAS and AAS.

In another design, terminal 120 activates the most preferred radio technologies for all applications in the MAS and AAS. In the example above, terminal 120 would activate radio technologies 1 and 2, which are the most preferred radio technologies for applications A, B and C.

In yet another design, terminal 120 activates all radio technologies for all applications in the MAS and AAS. In the example above, terminal 120 would activate radio technologies 1, 2 and 3, which are included in the three sets of radio technologies for the three applications in the MAS and AAS.

When multiple radio technologies are activated, terminal 120 may associate each active application with the most preferred radio technology for that application amongst all activated radio technologies. Each active application may then be supported by the most preferred and available radio technology for that application.

In one design, terminal 120 activates one or more radio technologies based on its capabilities and the availability of radio technologies in order to support the most number of applications in the MAS and AAS. For policy table 300, the radio technology groups may be prioritized, e.g., based on the applications associated with each group. Terminal 120 may activate one or more radio technologies in one or more highest priority groups. All applications associated with each groups of activated radio technologies would then be supported on the activated radio technologies.

In another design, terminal 120 activates one or more radio technologies based on the priorities of the active applications and the preferences of the radio technologies for each active application. Terminal 120 may initially activate the most preferred and available radio technology 1 for an active application X. If a higher priority application Y is launched, then terminal 120 may activate the most preferred and available radio technology 2 for application Y. If radio technology 1 is deactivated in order to activate radio technology 2, then terminal 120 may move application X over to radio technology 2 or may activate another radio technology for application X. For example, terminal 120 may have several applications operating on an infrastructure WLAN. A gaming application having higher priority may be launched and may require an ad hoc WLAN. Terminal 120 may then activate an ad hoc WLAN for the gaming application, deactivate the infrastructure WLAN, activate another radio technology (e.g., 1x or UMTS), and move the other active applications over to the activated radio technology.

Terminal 120 may activate a new radio technology when requested by an application, when a currently activated radio technology underperforms or goes out of coverage, and/or based on other trigger events. If terminal 120 is not operating on any radio technology when an application is launched, then terminal 120 may use the technology preferences of the application to select and activate the most preferred and available radio technology for the application. When an application is launched and cannot be supported on any currently activated radio technology, terminal 120 may activate the most preferred radio technology for the application if such activation does not required deactivation of any activated radio technology.

Terminal 120 may deactivate a radio technology when this radio technology is no longer used by any active application. For example, when all applications are supported on a more preferred radio technology, all less preferred radio technologies may be deactivated. When an active application is using a given radio technology, terminal 120 may deactivate the radio technology if the application has either ended the call or is moved to a more preferred radio technology. Terminal 120 may also deactivate a radio technology if activation of another radio technology (e.g., for a higher priority application) pre-empts this radio technology.

Upon power up, terminal 120 may attempt to acquire the radio technology that was last activated by terminal 120 prior to powering down. This may improve the likelihood of obtaining service. Terminal 120 may also attempt to acquire multiple radio technologies in parallel and may put active applications on the radio technology that is acquired first. This may speed up the time to service for the first call. The preference order of radio technologies at power up may be different from the preference order of radio technologies during normal operation.

A set of call flows illustrating various features of the techniques is described below. The call flows may be used for various scenarios, as noted below.

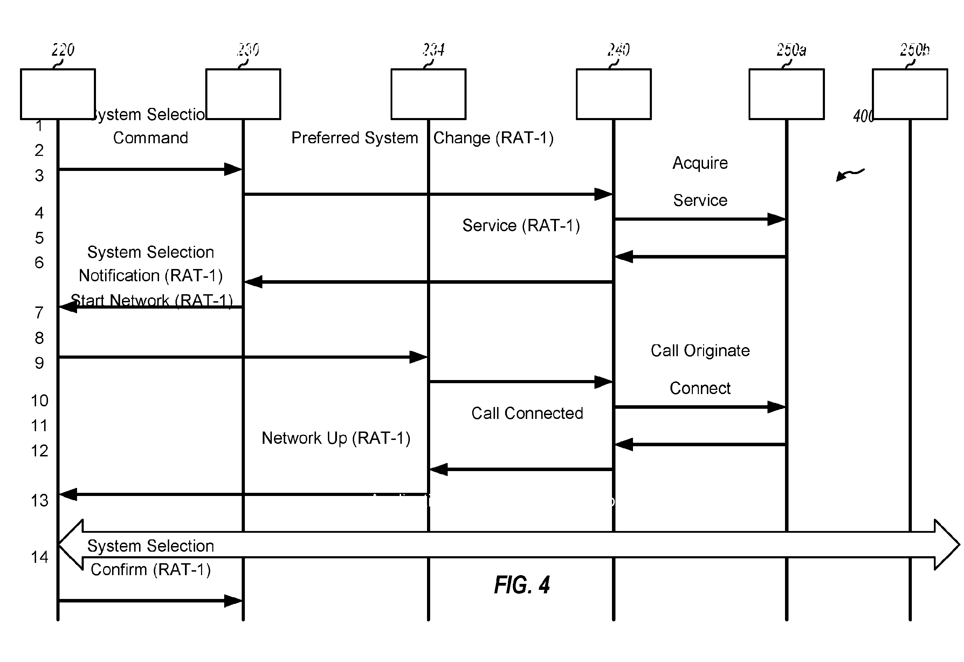

FIG. 4 shows a design of a call flow 400 for performing system selection when an application is launched. Initially, an application X sends a System Selection Command to system policy manager 230 to ascertain which radio technology to use for communication (step 1). System policy manager 230 determines that radio technology 1 (RAT-1) is the most preferred radio technology for application X and sends a Preferred System Change message with radio technology 1 to CM/SD module 240 (step 2). CM/SD module 240 invokes module 250a to acquire radio technology 1 (step 3). Module 250a acquires radio technology 1 as directed by CM/SD module 240 and returns a service available notification (step 4). CM/SD module 240 forwards this notification to system policy manager 230 (step 5), which then sends a System Selection Notification with radio technology 1 to application X (step 6). Application X may recognize that radio technology 1 is the most preferred and available radio technology for the application based on the System Selection Notification received from system policy manager 230.

In this example, application X is a packet-based application that uses the DS/PS layers. Application X then sends a Start Network message to DS/PS module 234 to bring up radio technology 1 (step 7). DS/PS module 234 then sends a call origination message to CM/SD module 240 (step 8), which directs module 250a to originate a call on radio technology 1 (step 9). In general, application X does not need to know which radio technologies can be used or their order of preference and may just send the Start Network message. System policy manager 230 and/or CM/SD module 240 selects an appropriate radio technology based on the policy table and may iterate over all listed radio technologies in their order of preference to determine the most preferred and available radio technology. Module 250a establishes a connection and returns a connect notification to CM/SD module 240 (step 10). CM/SD module 240 then provides a call connected notification to DS/PS module 234 (step 11), which in turn notifies application X that radio technology 1 is up (step 12). Application X may perform additional interaction with one or more network entities via radio technology 1, e.g., to acquire QoS configuration, register with a SIP server, etc. (step 13). Application X then sends a System Selection Confirm message with radio technology 1 to system policy manager 230 (step 14), which stores this information for use in maintaining concurrency across active applications.

In the design shown in FIG. 4, an application may first check with system policy manager 230 to determine which radio technology and configuration to use for communication. The application may also acquire appropriate resources from resource manager 242. The application may determine the required QoS based on the activated radio technology and may request activation of QoS from DS/PS module 234. The application may make service available to the user upon completing all of these steps.

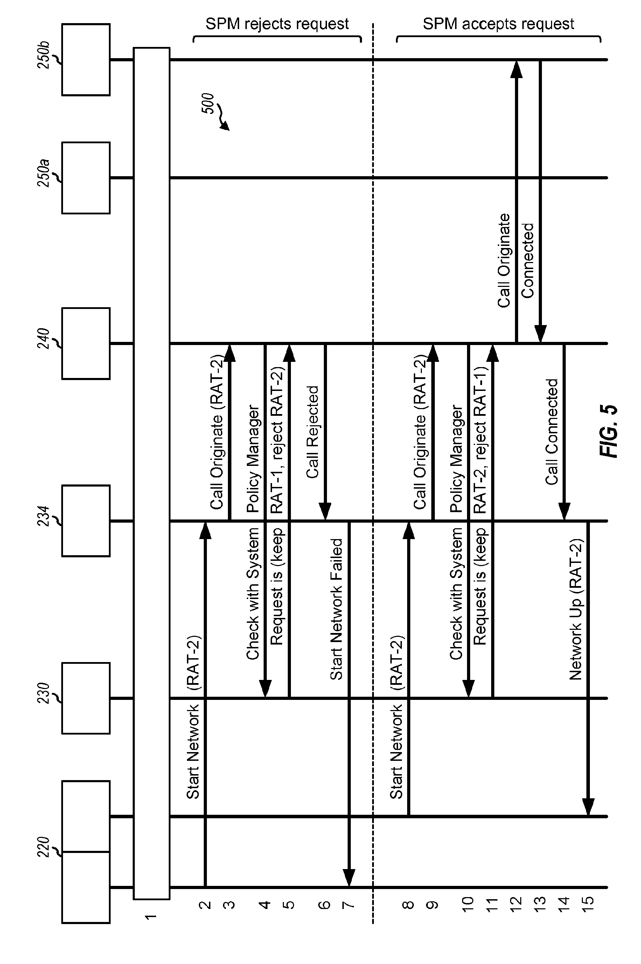

FIG. 5 shows a design of a call flow 500 for performing system selection when additional applications are launched. Terminal 120 is initially active on radio technology 1 (step 1, which may include the steps in FIG. 4). An application Y sends a Start Network command to DS/PS module 234 to bring up radio technology 2 (RAT-2) (step 2). DS/PS module 234 then sends a call origination message to CM/SD module 240 (step 3), which checks with system policy manager 230 (step 4). System policy manager 230 determines that radio technology 2 cannot co-exist with radio technology 1 and rejects the request, e.g., because application Y has lower priority than the application(s) currently using radio technology 1. System policy manager 230 then returns a response to keep radio technology 1 and reject radio technology 2 (step 5). CM/SD module 240 then provides a data call rejected notification to DS/PS module 234 (step 6), which returns a Start Network Failed notification to application Y (step 7).

At a later time, an application Z sends a Start Network command to DS/PS module 234 to bring up radio technology 2 (step 8). DS/PS module 234 then sends a call origination message to CM/SD module 240 (step 9), which checks with system policy manager 230 (step 10). System policy manager 230 accepts the request, e.g., because application Z has higher priority than the application(s) currently using radio technology 1. This results in preemption of radio technology 1 and possibly the currently active application(s) and replacement with radio technology 2 and the newly activated application Z. System policy manager 230 then returns a response to activate radio technology 2 and deactivate radio technology 1 (step 11). CM/SD module 240 then sends a call origination message to module 250b for radio technology 2 (step 12). Subsequent steps 13 to 15 for radio technology 2 are the same as steps 10 to 12, respectively, for radio technology 1 in FIG. 4.

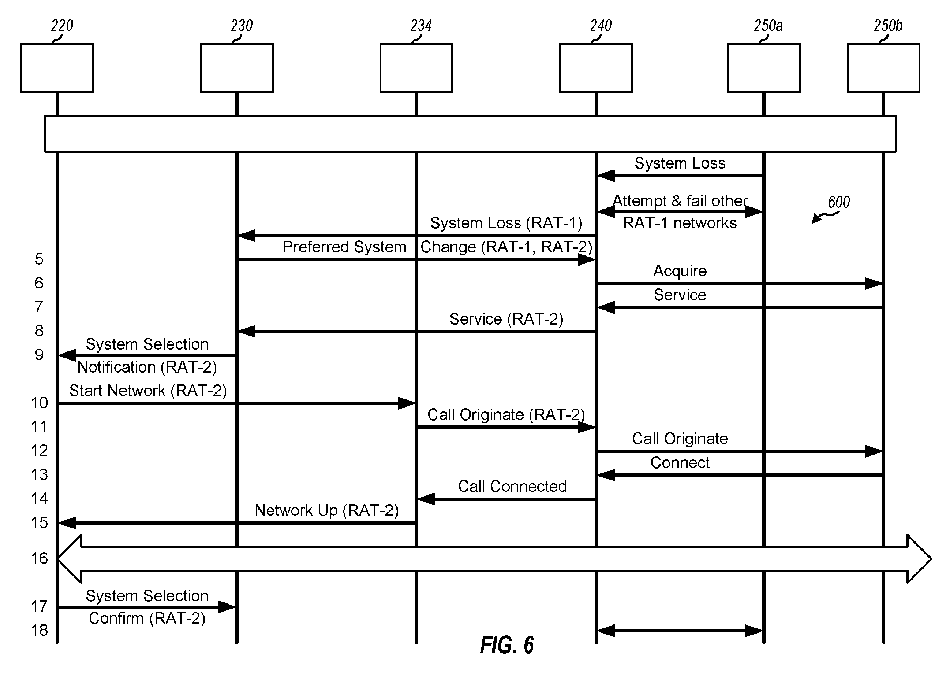

**FIG. 6** shows a design of a call flow 600 for change of radio technology due to loss of coverage. Terminal 120 initially has application X operating on radio technology 1 (step 1). Terminal 120 moves out of the coverage of radio technology 1, and module 250a provides a system loss notification to CM/SD module 240 (step 2). CM/SD module 240 then attempts to find other wireless networks of the same radio technology 1 (step 3). Upon failure to find another wireless network of radio technology 1, CM/SD module 240 informs system policy manager 230 of system loss (step 4). System policy manager 230 decides to retain radio technology 1, which is the most preferred radio technology, and also includes radio technology 2 in a Preferred System Change message to CM/SD module 240 (step 5).

CM/SD module 240 invokes module 250b to acquire radio technology 2 (step 6), which then returns a service available notification (step 7). Subsequent steps 8 to 11 are performed for radio technology 2 in similar manner as steps 5 to 8, respectively, for radio technology 1 in FIG. 4. CM/SD module 240 directs module 250b to originate a call on radio technology 2 (step 12). Module 250b establishes a connection on radio technology 2 and returns a connect notification (step 13). Subsequent steps 14 to 17 are performed in similar manner as steps 11 to 14, respectively, in FIG. 4. CM/SD module 240 periodically checks for the availability of radio technology 1 since it is more preferred than radio technology 2 (step 18).

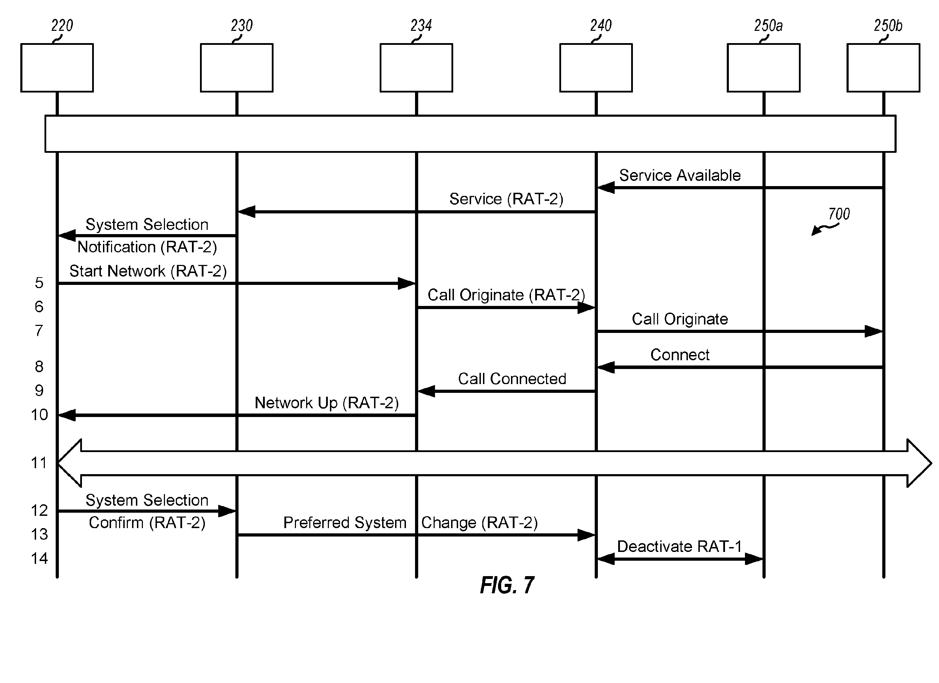

**FIG. 7** shows a design of a call flow 700 for change of radio technology when a more preferred radio technology becomes available. Terminal 120 initially has application X operating on radio technology 1, which is less preferred than radio technology 2 (step 1). Module 250b provides a notification that radio technology 2 is available (step 2). Subsequent steps 3 through 12 are performed for radio technology 2 in similar manner as steps 5 to 14, respectively, for radio technology 1 in FIG. 4. System policy manager 230 then sends a Preferred System Change message with radio technology 2 to CM/SD module 240 (step 13). CM/SD module 240 interacts with module 250a to deactivate radio technology 1 (step 14).

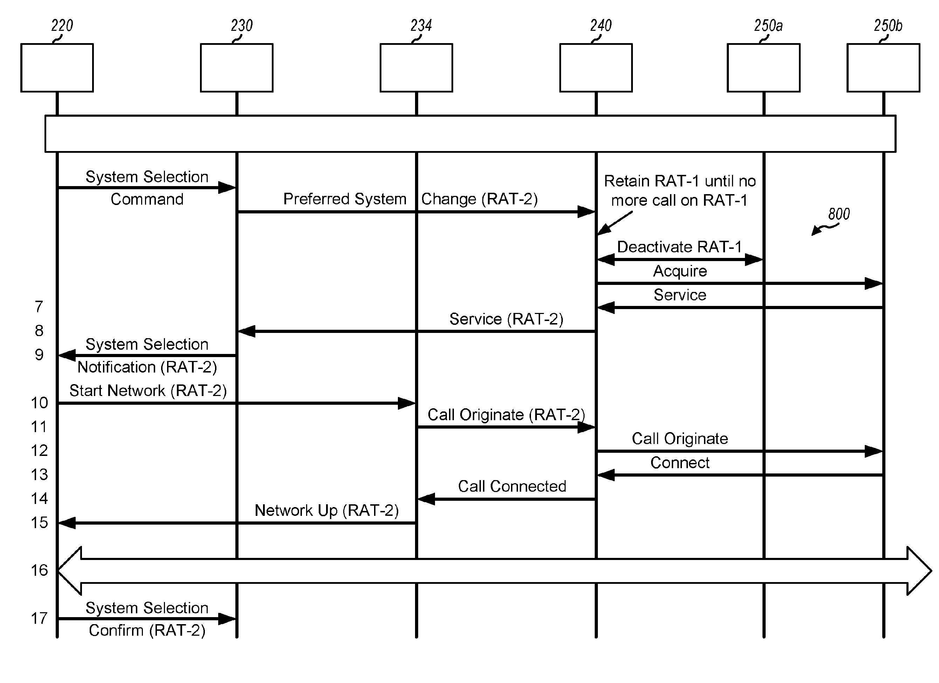

**FIG. 8** shows a design of a call flow 800 for system selection when a higher priority application starts. Terminal 120 initially has application X operating on radio technology 1 (step 1). A higher priority application Y sends a System Selection Command to system policy manager 230 to ascertain which radio technology to use for communication (step 2). System policy manager 230 determines that radio technology 2 is the most preferred radio technology for application Y and sends a Preferred System Change message with radio technology 2 to CM/SD module 240 (step 3). In this example, radio technologies 1 and 2 cannot co-exist. CM/SD module 240 retains radio technology 1 until all calls on radio technology 1 have ended (step 4) and then brings down radio technology 1 (step 5). Subsequent steps 6 through 17 are performed for radio technology 2 in similar manner as steps 3 to 14, respectively, for radio technology 1 in FIG. 4.

As shown in FIG. 8, the call for the lower priority application X may be terminated when the higher priority application Y is started, if these applications utilize different radio technologies that cannot co-exist. Application X may be moved over to radio technology 2 if this radio technology can be used by application X. Another radio technology that can co-exist with radio technology 2 may also be activated for application X.

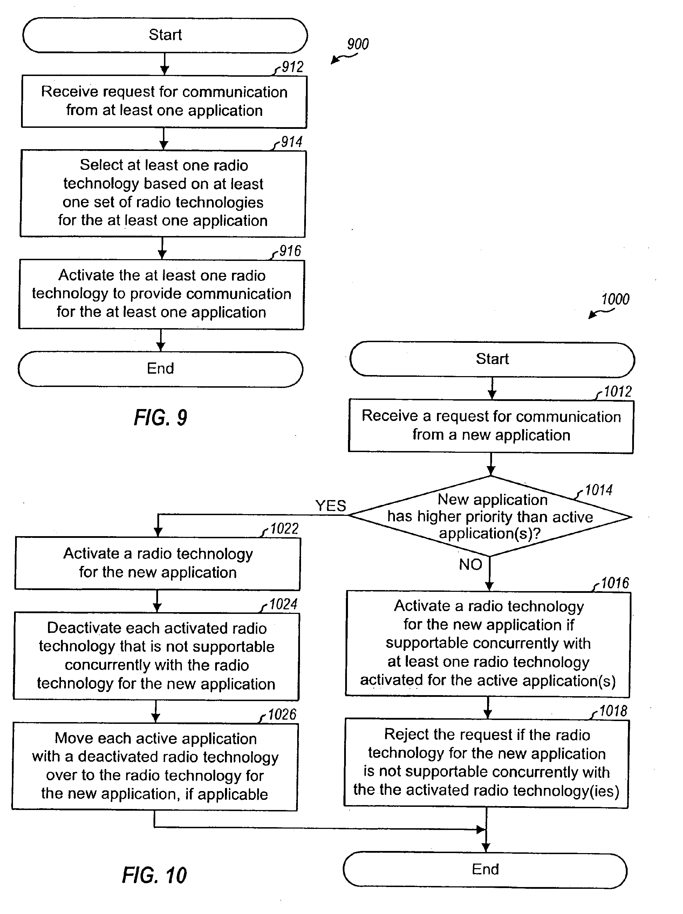

**FIG. 9** shows a design of a process 900 for performing system selection. Process 900 may be performed by system policy manager 230 and/or other modules within terminal 120. Request for communication may be received from at least one application (block 912). The request may correspond to the System Selection Command in FIGS. 4 through 8. At least one radio technology may be selected based on at least one set of radio technologies for the at least one application (block 914). Each set may include one or more radio technologies usable by a respective application. The at least one radio technology may be activated to provide communication for the at least one application (block 916). The activation may be achieved via the Preferred System Change message in FIGS. 4 through 8.

For block 914, the at least one radio technology may be selected based on priorities of the at least one application and/or preferences of the radio technologies usable by each application. In one design, a minimum number of radio technologies comprising a radio technology in each set of radio technologies may be selected. In another design, all radio technologies in the at least one set of radio technologies may be selected, if supportable concurrently. In yet another design, the at least one application may be considered in a sequential order based on priority, starting with the highest priority application, and the most preferred radio technology may be selected for each application being considered. In yet another design, a group of radio technologies may be selected from among a plurality of groups of radio technologies, with the selected group including the at least one radio technology. The selected group may include the most preferred radio technology for each application. The system selection may also be performed in other manners.

**FIG. 10** shows a design of a process 1000 for performing system selection for a new application. Process 1000 may be performed after completing process 900 in FIG. 9. A request for communication may be received from the new application (block 1012). A determination may be made whether the new application has higher priority than at least one currently active application (block 1014). If the answer is 'No' for block 1014, then a radio technology for the new application may be activated if supportable concurrently with at least one radio technology activated for the at least one active application (block 1016). The request may be rejected if the radio technology for the new application is not supportable concurrently with the at least one activated radio technology (block 1018).

If the new application has higher priority than the active application(s) and the answer is 'Yes' for block 1014, then a radio technology for the new application may be activated (block 1022). Each activated radio technology that is not supportable concurrently with the radio technology for the new application may be deactivated (block 1024). Each active application with a deactivated radio technology may be moved over to the radio technology for the new application, if applicable (block 1026).

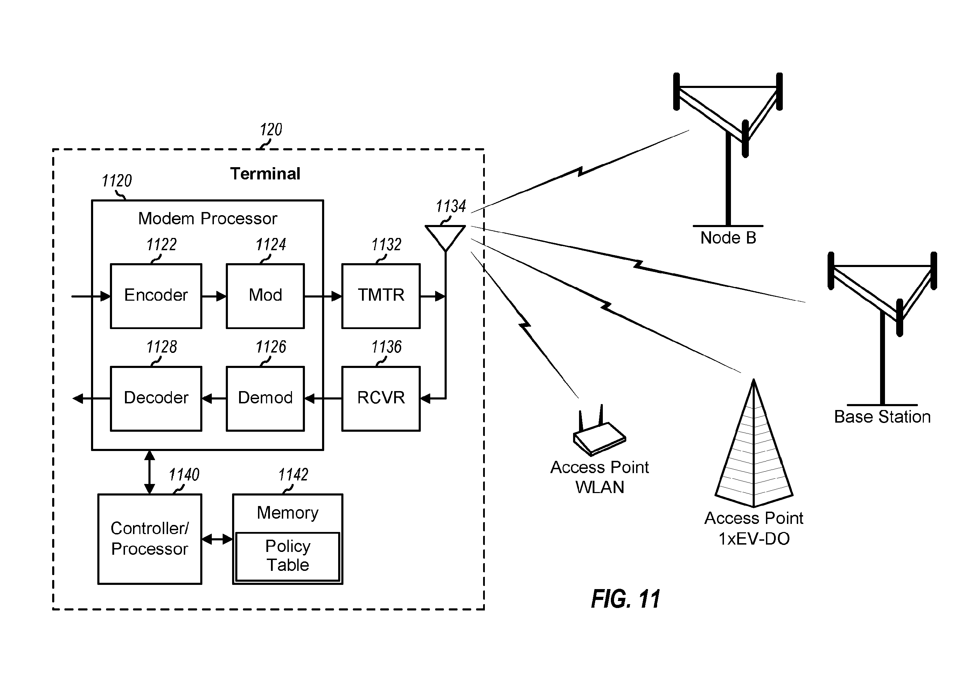

**FIG. 11** shows a block diagram of a design of terminal 120. On the transmit path, an encoder 1122 receives data and signaling to be sent by terminal 120 to a base station, a Node B, or an access point. Encoder 1122 processes (e.g., formats, encodes, and interleaves) the data and signaling in accordance with a suitable coding scheme. A modulator (Mod) 1124 further processes (e.g., modulates and scrambles) the coded data and signaling and generates output chips. In general, the processing by encoder 1122 and modulator 1124 is determined by the radio technology (e.g., IEEE 802.11, 1x, 1xEV-DO, UMTS, or GSM) for a wireless network to which data is sent. A transmitter (TMTR) 1132 conditions (e.g., converts to analog, filters, amplifies, and frequency upconverts) the output chips and generates a radio frequency (RF) signal, which is transmitted via an antenna 1134.

On the receive path, antenna 1134 receives RF signals transmitted by base stations, Node Bs, and/or access points. A receiver (RCVR) 1136 conditions (e.g., filters, amplifies, frequency downconverts, and digitizes) the received RF signal from antenna 1134 and provides samples. A demodulator (Demod) 1126 processes (e.g., descrambles and demodulates) the samples and provides symbol estimates. A decoder 1128 processes (e.g., deinterleaves and decodes) the symbol estimates and provides decoded data and signaling. In general, the processing by demodulator 1126 and decoder 1128 is complementary to the processing performed by the modulator and encoder at the base stations, Node Bs, and access points. Encoder 1122, modulator 1124, demodulator 1126, and decoder 1128 may be implemented by a modem processor 1120. For simplicity, FIG. 11 shows one instance of each processing unit. In general, there may one or multiple modem processors, transmitters, receivers, controllers, and memories for different radio technologies supported by terminal 120.

A controller/processor 1140 directs the operation of various processing units at terminal 120. Controller/processor 1140 and/or other processing units within terminal 120 may implement processing module 200 in FIG. 2. Controller/processor 1140 may also implement or direct process 900 in FIG. 9, process 1000 in FIG. 10, and/or other processes for the techniques described herein. A memory 1142 stores program codes and data for terminal 120. Memory 1142 may also store a policy table containing applications supported by terminal 120 and a set of radio technologies usable by each application, e.g., table 300 in FIG. 3. The policy table may also include priorities of the applications, preferences/priorities of the radio technologies usable by each application, and/or other information that may be used for system selection.

The techniques described herein may be implemented by various means. For example, these techniques may be implemented in hardware, firmware, software, or a combination thereof. For a hardware implementation, the processing units used to perform the techniques may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, a computer, or a combination thereof.

For a firmware and/or software implementation, the techniques may be implemented with code (e.g., procedures, functions, modules, instructions, etc.) that performs the functions described herein. In general, any computer/processor-readable medium tangibly embodying firmware and/or software code may be used in implementing the techniques described herein. For example, the firmware and/or software code may be stored in a memory (e.g., memory 1142 in FIG. 11) and executed by a processor (e.g., processor 1140). The memory may be implemented within the processor or external to the processor. The firmware and/or software code may also be stored in a computer/processor-readable medium such as random access memory (RAM), read-only memory (ROM), non-volatile random access memory (NVRAM), programmable read-only memory (PROM), electrically erasable PROM (EEPROM), FLASH memory, floppy disk, compact disc (CD), digital versatile disc (DVD), magnetic or optical data storage device, etc. The code may be executable by one or more computers/processors and may cause the computer/processor(s) to perform certain aspects of the functionality described herein.

An apparatus implementing the techniques described herein may be a stand-alone unit or may be part of a device. The device may be (i) a stand-alone integrated circuit (IC), (ii) a set of one or more ICs that may include memory ICs for storing data and/or instructions, (iii) an ASIC such as a mobile station modem (MSM), (iv) a module that may be embedded within other devices, (v) a cellular phone, wireless device, handset, or mobile unit, (vi) etc.

The previous description of the disclosure is provided to enable any person skilled in the art to make or use the disclosure. Various modifications to the disclosure will be readily apparent to those skilled in the art, and the generic principles defined herein may be applied to other variations without departing from the spirit or scope of the disclosure. Thus, the disclosure is not intended to be limited to the examples and designs described herein but is to be accorded the widest scope consistent with the principles and novel features disclosed herein.

## Claims

1. An apparatus for wireless communication, comprising:
at least one processor configured to receive request for communication from at least one application, to select at least one radio technology based on at least one set of radio technologies for the at least one application, each set including one or more radio technologies usable by a respective application, and to activate the at least one radio technology to provide communication for the at least one application; and
a memory coupled to the at least one processor.

2. The apparatus of claim 1, wherein the at least one processor is configured to select the at least one radio technology based further on priorities of the at least one application.

3. The apparatus of claim 1, wherein the at least one processor is configured to select the at least one radio technology based further on preferences of the one or more radio technologies in each set of radio technologies.

4. The apparatus of claim 1, wherein the at least one processor is configured to select a minimum number of radio technologies comprising a radio technology in each set of radio technologies.

5. The apparatus of claim 1, wherein the at least one processor is configured to select all radio technologies in the at least one set of radio technologies if supportable concurrently.

6. The apparatus of claim 1, wherein the at least one processor is configured to consider the at least one application in a sequential order based on priority, starting with a highest priority application, and to select a most preferred radio technology for each application being considered.

7. The apparatus of claim 1, wherein the at least one processor is configured to receive a request for communication from an application of lower priority than the at least one application, to activate a radio technology for the lower priority application if supportable concurrently with the at least one radio technology, and to reject the request if the radio technology for the lower priority application is not supportable concurrently with the at least one radio technology.

8. The apparatus of claim 1, wherein the at least one processor is configured to receive a request for communication from an application of higher priority than the at least one application, to activate a radio technology for the higher priority application, and to deactivate each of the at least one radio technology not supportable concurrently with the radio technology for the higher priority application.

9. The apparatus of claim 8, wherein the at least one processor is configured to move an application with a deactivated radio technology over to the radio technology for the higher priority application.

10. The apparatus of claim 1, wherein the at least one processor is configured to select a group of radio technologies from among a plurality of groups of radio technologies, the selected group comprising the at least one radio technology.

11. The apparatus of claim 10, wherein the at least one processor is configured to select a group comprising a most preferred radio technology for each of the at least one application.

12. The apparatus of claim 10, wherein the plurality of groups are associated with different priorities, and wherein the at least one processor is configured to select a highest priority group comprising the at least one radio technology.

13. The apparatus of claim 1, wherein the at least one processor is configured to activate a radio technology for an application in a minimum application set when the application is launched.

14. The apparatus of claim 13, wherein the at least one processor is configured to deactivate each of the at least one radio technology not supportable concurrently with the radio technology for the application in the minimum application set.

15. The apparatus of claim 1, wherein the memory is configured to store a table of applications and a set of radio technologies usable by each application.

16. The apparatus of claim 15, wherein the memory is further configured to store priorities of the applications in the table.

17. The apparatus of claim 15, wherein the memory is further configured to store preferences of the radio technologies usable by each application.

18. A method for wireless communication, comprising:
receiving request for communication from at least one application;
selecting at least one radio technology based on at least one set of radio technologies for the at least one application, each set including one or more radio technologies usable by a respective application; and
activating the at least one radio technology to provide communication for the at least one application.

19. The method of claim 18, wherein the selecting the at least one radio technology comprises selecting a minimum number of radio technologies comprising a radio technology in each set of radio technologies.

20. The method of claim 18, wherein the selecting the at least one radio technology comprises
considering the at least one application in a sequential order based on priority, starting with a highest priority application, and
selecting a most preferred radio technology for each application being considered.

21. The method of claim 18, further comprising:
receiving a request for communication from an application of lower priority than the at least one application;
activating a radio technology for the lower priority application if supportable concurrently with the at least one radio technology; and
rejecting the request if the radio technology for the lower priority application is not supportable concurrently with the at least one radio technology.

22. The method of claim 18, further comprising:
receiving a request for communication from an application of higher priority than the at least one application;
activating a radio technology for the higher priority application; and
deactivating each of the at least one radio technology not supportable concurrently with the radio technology for the higher priority application.

23. An apparatus for wireless communication, comprising:
means for receiving request for communication from at least one application;
means for selecting at least one radio technology based on at least one set of radio technologies for the at least one application, each set including one or more radio technologies usable by a respective application; and
means for activating the at least one radio technology to provide communication for the at least one application.

24. The apparatus of claim 23, wherein the means for selecting the at least one radio technology comprises means for selecting a minimum number of radio technologies comprising a radio technology in each set of radio technologies.

25. The apparatus of claim 23, wherein the means for selecting the at least one radio technology comprises
means for considering the at least one application in a sequential order based on priority, starting with a highest priority application, and
means for selecting a most preferred radio technology for each application being considered.

26. The apparatus of claim 23, further comprising:
means for receiving a request for communication from an application of lower priority than the at least one application;
means for activating a radio technology for the lower priority application if supportable concurrently with the at least one radio technology; and
means for rejecting the request if the radio technology for the lower priority application is not supportable concurrently with the at least one radio technology.

27. The apparatus of claim 23, further comprising:
means for receiving a request for communication from an application of higher priority than the at least one application;
means for activating a radio technology for the higher priority application; and
means for deactivating each of the at least one radio technology not supportable concurrently with the radio technology for the higher priority application.

28. A computer program product, comprising:
a computer-readable medium comprising:
code for causing at least one computer to receive request for communication from at least one application;
code for causing at least one computer to select at least one radio technology based on at least one set of radio technologies for the at least one application, each set including one or more radio technologies usable by a respective application; and
code for causing the at least one computer to activate the at least one radio technology to provide communication for the at least one application.

29. The computer program product of claim 28, wherein the computer-readable medium further comprises:
code for causing the at least one computer to select a minimum number of radio technologies comprising a radio technology in each set of radio technologies.

30. The computer program product of claim 28, wherein the computer-readable medium further comprises:
code for causing the at least one computer to consider the at least one application in a sequential order based on priority, starting with a highest priority application; and
code for causing the at least one computer to select a most preferred radio technology for each application being considered.

31. The computer program product of claim 28, wherein the computer-readable medium further comprises:
code for causing the at least one computer to receive a request for communication from an application of lower priority than the at least one application;
code for causing the at least one computer to activate a radio technology for the lower priority application if supportable concurrently with the at least one radio technology; and
code for causing the at least one computer to reject the request if the radio technology for the lower priority application is not supportable concurrently with the at least one radio technology.

32. The computer program product of claim 28, wherein the computer-readable medium further comprises:
code for causing the at least one computer to receive a request for communication from an application of higher priority than the at least one application;
code for causing the at least one computer to activate a radio technology for the higher priority application; and
code for causing the at least one computer to deactivate each of the at least one radio technology not supportable concurrently with the radio technology for the higher priority application.
